# EUROPEAN PATENT SPECIFICATION

(11) **EP 2 380 720 B1**
(45) Date of publication and mention of the grant of the patent: **22.08.2012**
(21) Application number: 11157131.1
(22) Date of filing: 07.03.2011
(51) Int. Cl.: B29C 33/26, B29L 31/08

(54) **An improved wind turbine blade manufacturing arrangement**
Verbesserte Anordnung zur Herstellung einer Windturbinenschaufel
Agencement amélioré de fabrication de pale d'éolienne

(30) Priority: 22.04.2010 DK 201070162
(43) Date of publication of application: 26.10.2011
(73) Proprietor: Vestas Wind Systems A/S, 8200 Aarhus N (DK)
(72) Inventor: Petersen, Leif Kappel, 6940, Lem St (DK)

(56) References cited:
- WO-A1-2007/054088
- DE-B3-102008 046 573
- DE-U1-202010 014 682

## Description

### TECHNICAL FIELD

The invention relates to a wind turbine blade manufacturing arrangement comprising a first mould and a second mould connected by a hinge mechanism and presenting respective elongated first and second moulding surfaces. The invention also relates to a method for manufacturing a wind turbine blade.

### BACKGROUND

A general trend in wind turbine industry is for the turbines to become larger. This entails some issues for the manufacturing of the blades, which can exceed 50 metres in length. With such large items, there is a desire to keep the required factory space down, since such space represents large investments for manufacturers.

A wind turbine blade is often manufactured in two elongated moulds placed laterally beside each other with their longitudinal directions substantially parallel, at which the moulds are connected with some kind of hinge mechanism. In the moulds, respective pressure and suction side shells are laid up in fibre reinforced plastics, e.g. glass and epoxy. This is done with the mould surfaces facing upwards. After curing, the shells are bonded to each other, usually with a spar or similar structural reinforcement element placed between them. For this assembly of the shells, by means of the hinge mechanism one of the moulds is turned, with the cured shell in it, onto the top of the other mould so that the mould surfaces are facing each other, and the shells are brought together with adhesive in suitable locations. Variants of such a process are described in DK200200306U3 and EP1562733B1.

WO2007/054088 suggests, in order to reduce the required height, a blade manufacturing arrangement with a two axis hinge mechanism, whereby one of the moulds is turned about halfway around one of the axes, and the rest of the way around the other axis. Although this could reduce the height required for the turning step, such an arrangement would require a relatively large horizontal extension in the lateral direction of the moulds, allowing enough room for the double axis hinge mechanism before turning, when the mould surfaces are faced upwards.

DE-B-102008046573 discloses an arrangement in accordance with the preamble of claim 1.

### SUMMARY

An object of the invention is to improve manufacturing of wind turbine blades. Another object of the invention is to reduce the space required to manufacture wind turbine blades.

These objects are reached with a wind turbine blade manufacturing arrangement comprising a first mould and a second mould connected by a hinge mechanism and presenting respective elongated first and second moulding surfaces, wherein the first mould is adapted to be rotated from an open mould position to a mould closing position by means of the hinge mechanism in a first and a second rotation step, characterized in that the hinge mechanism is arranged so as to provide for, during at least a part of the first rotation step, the first mould undergoing a combined rotational and a translational movement.

The first mould rotates during the first and a second rotation step around a first and a second axis of rotation, respectively. In said WO2007/054088, the axis of rotation for the mould being turned remains fixed during each step of the rotation. The invention introduces a combined rotational and a translational movement, during which the first axis of rotation moves. Thereby, it is possible for the hinge mechanism being arranged so as to provide for the first mould, in particular the centre of gravity thereof, being translated, in the first rotation step, away from the second mould. This in turn will allow for the first and second mould parts to be located close to each other in the open mould position of the first mould, which will make it possible to keep the width of the entire blade manufacturing arrangement, while retaining the benefit of the low height requirement provided by the double rotational axis hinge mechanism.

The first mould part can also, during the first rotation step, move away from the second mould part, since the distance between the first axis of rotation and the second mould, during at least a part of the first rotation step, is larger than the distance between the first mould and the second mould.

It is understood that the first and second moulding surfaces extend in a longitudinal direction from a respective root end to a respective tip end, which correspond to respective root and tip ends of the blades manufactured in the blade manufacturing arrangement. (According to this presentation, a transverse direction is defined as extending perpendicularly to the longitudinal direction, from a location of a blade leading edge to a location of a blade a trailing edge.) It is further understood that the longitudinal directions of the first and second moulding surfaces are substantially parallel, and the second mould surface is oriented so as to face substantially upwards.

It is also understood that the first and second axes of rotation are substantially parallel to the longitudinal direction of the first moulding surface, and that they are non-coinciding, but normally substantially parallel. Also, in the open mould position, the first moulding surface is facing substantially upwards, and in the mould closing position, the first moulding surface is located above the second moulding surface, and the first and second moulding surfaces are facing each other. Further, it is understood that during the first rotation step the first mould is rotated from the open mould position to an intermediate position in which the first moulding surface is turned towards the second mould part. Also, during the second turning step, the first mould is rotated from the intermediate position to the mould closing position.

Preferably, the hinge mechanism comprises at least one rotation element which at a first element connection is rotationally connected to a fixing unit which is adapted to remain fixed during the first rotation step, and at a second element connection is rotationally connected to the first mould, the distance between the second element connection and the second mould being, at least during the open mould position of the first mould, shorter that the distance between the first element connection and the second mould.

Preferably, the axes of rotation at the first and second element connections are parallel to the first axis of rotation. The fixing unit could be a part of the hinge mechanism, or it could be a separate unit, e.g. connected to the floor in the building in which the manufacturing arrangement is located.

Preferably, the distance between the centre of gravity of the first mould and the second mould is shorter that the distance between the second element connection and the second mould. Preferably, the rotation element is adapted to rotate in the opposite direction in relation to the first mould. Preferably, the hinge mechanism comprises at least one drive unit, adapted to act, during the first rotation step, on at least one of the at least one rotation element so as the urge the rotation element to rotate about the first element connection. Preferably, the distance between the second axis of rotation and the second mould is, at least in the open mould position, shorter than the distance between the second element connection and the second mould. Preferably, the first mould is provided with at least one roller adapted to carry at least a portion of the weight of the first mould, the distance between the roller and the second mould being shorter than the distance between the second element connection and the second mould, at least in the open mould position. Preferably, the distance between the roller and the second mould being shorter than the distance between the centre of gravity of the first mould and the second mould, at least in the open mould position.

The objects are also reached with a method for manufacturing a wind turbine blade according to any one of the claims 10-15.

### DESCRIPTION OF THE FIGURES

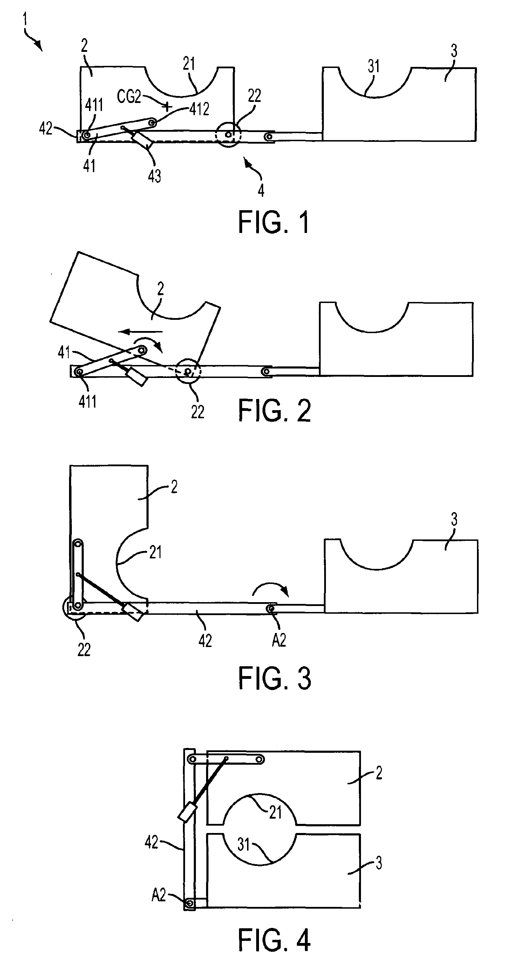

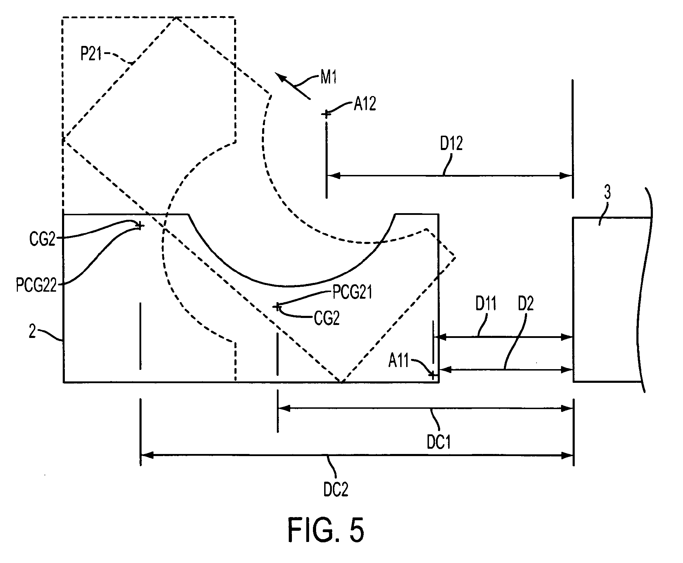

Below, embodiments of the invention will be described with reference to the drawings, in which fig. 1 - fig. 4 show side views of a short end of a wind turbine blade manufacturing arrangement, with respective different positions of a mould thereof, and fig. 5 shows schematically the mould of the manufacturing arrangement during the positions shown in fig. 1 - fig. 3.

### DETAILED DESCRIPTION

Fig. 1 shows a wind turbine blade manufacturing arrangement 1 comprising a first mould 2 and a second mould 3 connected by a hinge mechanism 4. The moulds 2, 3 present respective elongated first and second moulding surfaces 21, 31, extending in respective longitudinal parallel directions "into the paper presenting fig. 1". In fig. 1, the first mould 2 is in an open mould position in which the first and second mould surfaces 21, 31 are oriented so as to face upwards.

As detailed below, the first mould 2 is adapted to be rotated from the open mould position to a mould closing position by means of the hinge mechanism 4 in a first and a second rotation step, around a first and a second axis of rotation, respectively.

The hinge mechanism 4 comprises a plurality of rotation elements 41, which are distributed along the longitudinal direction of the first mould 2, and of which only one is shown in fig. 1. The rotation elements 41 are at respective first element connections 411 rotationally connected a fixing unit 42 of the hinge mechanism 4. The fixing unit 42 is adapted to remain fixed during the first rotation step. The rotation elements 41 are at respective second element connections 412 rotationally connected to the first mould 2. The distance between the second element connections 412 and the second mould 3 is, in the open mould position of the first mould 2, shorter that the distance between the first element connections 411 and the second mould 3.

It should be noted that, in the open mould position, the distance between the centre of gravity CG2 of the first mould 2 and the second mould 3 is preferably shorter that the distance between the second element connections 412 and the second mould 3.

Reference is made also to fig. 2 and fig. 3. For each of the rotation elements 41, the hinge mechanism comprises a drive unit 43, which is adapted to act between the fixing unit 42 and the respective the rotation element 41, so as the urge the rotation element 41 to rotate about the first element connection 411. This will cause the first mould 2 to rotate in the opposite direction, as indicated in fig. 2, to end up in an intermediate position as shown in fig. 3, in which the first moulding surface 21 is turned towards the second mould 3. The drive unit 43 can be of any suitable kind, for example a hydraulic actuator or an electric motor.

For this first rotation step, the first mould is provided with a plurality of rollers 22, of which only one is shown in the figures, distributed in the longitudinal direction of the first mould 2. In the open mould position shown in fig. 1, the distance between the rollers 22 and the second mould 3 is shorter than the distance between the second element connections 412 and the second mould 3. Also, in the open mould position the distance between the rollers 22 and the second mould 3 is shorter than the distance between the centre of gravity of the first mould 2 and the second mould 3. During the first rotation step, the rollers 22 will carry a portion of the weight of the first mould 2 and they will move in a direction away from the second mould 3.

As can be seen in fig. 4, during the second turning step, the first mould 2 is rotated around the second axis A2 from the intermediate position to a mould closing position, in which the first moulding surface 21 is located above the second moulding surface 31, and the first and second moulding surfaces are facing each other. The second axis A2 is provided by an articulated joint of the hinge mechanism between the fixing unit 42 and the second mould 3. The distance between the second axis A2 and the second mould 3 is, in the open mould position (fig. 1), shorter than the distance between the rotation elements 41 and the second mould 3.

It should be noted that the manufacturing arrangement 1 is in this embodiment adapted to provide, after the first mould 2 has reached the mould closing position shown in fig. 4, a relatively short translational movement, (not illustrated), of the first mould 2 so as to bring the first and second moulding surfaces 21, 31 closer to each other. This translational movement will finally close the manufacturing arrangement, at a manufacturing stage where cured wind blade shells in the moulds 2, 3 are bonded together with a spar located between them.

Reference is made to fig. 5. During the first rotation step, the first mould 2 undergoes a combined rotational and a translational movement, and the centre of gravity CG2 of the first mould 2 is translated from the position indicated as PCG21 to the position indicated as PCG22. Thus, the distance between the centre of gravity CG2 of the first mould 2 and the second mould 3 is increased, (as indicated by the double arrows DC1, DC2).

Fig. 1 also indicates schematically how the first axis of rotation moves during the first rotation step. (Such a moving axis of rotation is sometimes referred to as an instant centre of rotation.) When the first mould 2 starts rotating, the first axis of rotation is located approximately as indicated by the cross A11. When the first mould 2 is in a position indicated with broken lines P21, the first axis of rotation is located as indicated by the cross A12. As the first mould rotation continues the first axis of rotation moves in a direction approximately indicated by the arrow M1 . It can be seen that during the first rotation step, the first axis of rotation A11, A12 moves away from the second mould 3, and also upwards.

## Claims

1. A wind turbine blade manufacturing arrangement comprising a first mould (2) and a second mould (3) connected by a hinge mechanism (4) and presenting respective elongated first and second moulding surfaces (21, 31), wherein
- the first mould (2) is adapted to be rotated from an open mould position to a mould closing position by means of the hinge mechanism (4) in a first and a second rotation step, **characterized in that**
- the hinge mechanism (4) is arranged so as to provide for, during at least a part of the first rotation step, the first mould (2) undergoing a combined rotational and a translational movement.

2. A wind turbine blade manufacturing arrangement according to claim 1, wherein, the hinge mechanism (4) is arranged so as to provide for the first mould (2) being translated, in the first rotation step, away from the second mould (3).

3. A wind turbine blade manufacturing arrangement according to any one of the claims 1 or 2, wherein the hinge mechanism (4) comprises at least one rotation element (41) which at a first element connection (411) is rotationally connected to a fixing unit (42) which is adapted to remain fixed during the first rotation step, and at a second element connection (412) is rotationally connected to the first mould (2), the distance between the second element connection (412) and the second mould (3) being, at least during the open mould position of the first mould (2), shorter that the distance between the first element connection (411) and the second mould (3).

4. A wind turbine blade manufacturing arrangement according to claim 3, wherein the distance between the centre of gravity of the first mould (2) and the second mould (3) is shorter that the distance between the second element connection (412) and the second mould (3).

5. A wind turbine blade manufacturing arrangement according to any one of claims 3 or 4, wherein the rotation element (41) is adapted to rotate in the opposite direction in relation to the first mould (2).

6. A wind turbine blade manufacturing arrangement according to any one of claims 3-5, wherein the hinge mechanism (4) comprises at least one drive unit (43), adapted to act, during the first rotation step, on at least one of the at least one rotation element (41) so as the urge the rotation element (41) to rotate about the first element connection (411).

7. A wind turbine blade manufacturing arrangement according to any one of claims 3-6, wherein the first mould (2) is adapted to rotate during the first and a second rotation step around a first and a second axis of rotation (A11, A12, A2), respectively, and the distance between the second axis of rotation (A2) and the second mould (3) is, at least in the open mould position, shorter than the distance between the second element connection (412) and the second mould (3).

8. A wind turbine blade manufacturing arrangement according to any one of claims 3-7, wherein the first mould (2) is provided with at least one roller (22) adapted to carry at least a portion of the weight of the first mould (2), the distance between the roller (22) and the second mould (3) being shorter than the distance between the second element connection (412) and the second mould (3), at least in the open mould position.

9. A wind turbine blade manufacturing arrangement according to claim 8,
wherein the distance between the roller (22) and the second mould (3) being shorter than the distance between the centre of gravity of the first mould (2) and the second mould (3), at least in the open mould position.

10. A method for manufacturing a wind turbine blade, using a manufacturing arrangement comprising a first mould (2) and a second mould (3) connected by a hinge mechanism (4) and presenting respective elongated first and second moulding surfaces (21, 31), the method comprising rotating the first mould (2), from an open mould position to a mould closing position, in a first and a second rotation step, **characterized in that** during at least a part of the first rotation step, the first mould (2) undergoes a combined rotational and a translational movement.

11. A method according to claim 10, wherein the first mould (2) is translated, in the first rotation step, away from the second mould (3).

12. A method according to any one of the claims 10 or 11, comprising rotating, during the first rotation step, at least one rotation element (41) around a first element connection (411) between the rotation element (41) and a fixing unit (42) which remains fixed during the first rotation step, and simultaneously rotating the first mould (2) around a second element connection (412) between the first mould (2) and the rotation element (41), the distance between the second element connection (412) and the second mould (3) being, at least when the first mould (2) is in the open mould position, shorter that the distance between the first element connection (411) and the second mould (3).

13. A method according to claim 12, wherein the distance between the centre of gravity of the first mould (2) and the second mould (3) is, at least when the first mould (2) is in the open mould position, shorter that the distance between the second element connection (412) and the second mould (3).

14. A method according to any one of claims 12 or 13, wherein the rotation element (41) is rotates in the opposite direction in relation to the first mould (2).

15. A method according to any one of claims 12-14, wherein the first mould (2) rotates during the first and a second rotation step around a first and a second axis of rotation (A11, A12, A2), respectively, and the distance between the second axis of rotation (A2) and the second mould (3) is, at least in the open mould position, shorter than the distance between the second element connection (412) and the second mould (3).

## Patentansprüche

1. Einrichtung zum Herstellen eines Windturbinenblatts, die eine erste Form (2) und eine zweite Form (3) umfasst, die durch einen Gelenkmechanismus (4) verbunden sind und die eine längliche erste bzw. zweite Formfläche (21, 31) haben, wobei
- die erste Form (2) dafür eingerichtet ist, mittels des Gelenkmechanismus (4) von einer offenen Formposition in eine Formschließungsposition gedreht zu werden, und dies in einem ersten und einem zweiten Drehungsschritt, **dadurch gekennzeichnet, dass**
- der Gelenkmechanismus (4) dafür eingerichtet ist, dass die erste Form (2) während wenigstens eines Teils des ersten Drehungsschritts eine kombinierte drehende und translatorische Bewegung erfährt.

2. Einrichtung zum Herstellen eines Windturbinenblatts nach Anspruch 1, wobei der Gelenkmechanismus (4) dafür eingerichtet ist, dass die erste Form (2) im ersten Drehungsschritt translatorisch weg von der zweiten Form (3) bewegt wird.

3. Einrichtung zum Herstellen eines Windturbinenblatts nach einem der Ansprüche 1 oder 2, wobei der Gelenkmechanismus (4) wenigstens ein Drehelement (41) umfasst, das an einer ersten Elementverbindung (411) drehbar mit einer Befestigungseinheit (42) verbunden ist, die dafür eingerichtet ist, während des ersten Drehungsschritts feststehend zu sein, und das an einer zweiten Elementverbindung (412) drehbar mit der ersten Form (2) verbunden ist, wobei der Abstand zwischen der zweiten Elementverbindung (412) und der zweiten Form (3) wenigstens in der offenen Formposition der ersten Form (2) kleiner ist als der Abstand zwischen der ersten Elementverbindung (411) und der zweiten Form (3).

4. Einrichtung zum Herstellen eines Windturbinenblatts nach Anspruch 3, wobei der Abstand zwischen dem Schwerpunkt der ersten Form (2) und der zweiten Form (3) kleiner ist als der Abstand zwischen der zweiten Elementverbindung (412) und der zweiten Form (3).

5. Einrichtung zum Herstellen eines Windturbinenblatts nach einem der Ansprüche 3 oder 4, wobei das Drehelement (41) dafür eingerichtet ist, sich relativ zur ersten Form (2) in die entgegengesetzte Richtung zu drehen.

6. Einrichtung zum Herstellen eines Windturbinenblatts nach einem der Ansprüche 3 bis 5, wobei der Gelenkmechanismus (4) wenigstens eine Antriebseinheit (43) umfasst, die dafür eingerichtet ist, während des ersten Drehungsschritts auf wenigstens eines der wenigstens einen Drehelemente (41) derart einzuwirken, dass das Drehelement (41) dazu gebracht wird, sich um die erste Elementverbindung (411) zu drehen.

7. Einrichtung zum Herstellen eines Windturbinenblatts nach einem der Ansprüche 3 bis 6, wobei die erste Form (2) dafür eingerichtet ist, sich während des ersten und eines zweiten Drehungsschritts um eine erste bzw. eine zweite Drehachse (A11, A12, A2) zu drehen, und wobei der Abstand zwischen der zweiten Drehachse (A2) und der zweiten Form (3) wenigstens in der offenen Formposition kleiner ist als der Abstand zwischen der zweiten Elementverbindung (412) und der zweiten Form (3).

8. Einrichtung zum Herstellen eines Windturbinenblatts nach einem der Ansprüche 3 bis 7, wobei die erste Form (2) mit wenigstens einer Rolle (22) ausgestattet ist, die dafür eingerichtet ist, wenigstens einen Teil des Gewichts der ersten Form (2) zu tragen, und wobei wenigstens in der offenen Formposition der Abstand zwischen der Rolle (22) und der zweiten Form (3) kleiner ist als der Abstand zwischen der zweiten Elementverbindung (412) und der zweiten Form (3).

9. Einrichtung zum Herstellen eines Windturbinenblatts nach Anspruch 8, wobei wenigstens in der offenen Formposition der Abstand zwischen der Rolle (22) und der zweiten Form (3) kleiner ist als der Abstand zwischen dem Schwerpunkt der ersten Form (2) und der zweiten Form (3).

10. Verfahren zum Herstellen eines Windturbinenblatts, das eine Herstellungseinheit verwendet, die eine erste Form (2) und eine zweite Form (3) umfasst, die durch einen Gelenkmechanismus (4) verbunden sind und die eine längliche erste bzw. zweite Formfläche (21, 31) haben, wobei das Verfahren das Drehen der ersten Form (2) von einer offenen Formposition in eine Formschließungsposition in einem ersten und einem zweiten Drehungsschritt umfasst, **dadurch gekennzeichnet, dass** die erste Form (2) während wenigstens eines Teils des ersten Drehungsschritts eine kombinierte drehende und translatorische Bewegung erfährt.

11. Verfahren nach Anspruch 10, wobei die erste Form (2) im ersten Drehungsschritt translatorisch weg von der zweiten Form (3) bewegt wird.

12. Verfahren nach einem der Ansprüche 10 oder 11, das während des ersten Drehungsschritts Folgendes umfasst: das Drehen wenigstens eines Drehelements (41) um eine erste Elementverbindung (411) zwischen dem Drehelement (41) und einer Befestigungseinheit (42), die während des ersten Drehungsschritts feststehend bleibt, und das gleichzeitige Drehen der ersten Form (2) um eine zweite Elementverbindung (412) zwischen der ersten Form (2) und dem Drehelement (41), wobei der Abstand zwischen der zweiten Elementverbindung (412) und der zweiten Form (3) wenigstens dann, wenn die erste Form (2) in der offenen Formposition ist, kleiner ist als der Abstand zwischen der ersten Elementverbindung (411) und der zweiten Form (3).

13. Verfahren nach Anspruch 12, wobei wenigstens dann, wenn die erste Form (2) in der offenen Formposition ist, der Abstand zwischen dem Schwerpunkt der ersten Form (2) und der zweiten Form (3) kleiner ist als der Abstand zwischen der zweiten Elementverbindung (412) und der zweiten Form (3).

14. Verfahren nach einem der Ansprüche 12 oder 13, wobei das Drehelement (41) sich relativ zur ersten Form (2) in die entgegengesetzte Richtung dreht.

15. Verfahren nach einem der Ansprüche 12 bis 14, wobei die erste Form (2) sich während des ersten und eines zweiten Drehungsschritts um eine erste bzw. eine zweite Drehachse (A11, A12, A2) dreht, und wobei der Abstand zwischen der zweiten Drehachse (A2) und der zweiten Form (3) wenigstens in der offenen Formposition kleiner ist als der Abstand zwischen der zweiten Elementverbindung (412) und der zweiten Form (3).

## Revendications

1. Agencement de fabrication de pale d'éolienne comprenant un premier moule (2) et un deuxième moule (3) raccordés par un mécanisme de charnière (4) et présentant des première et deuxième surfaces de moulage (21, 31) allongées respectives, dans lequel :
- le premier moule (2) est adapté pour être entraîné en rotation depuis une position de moule ouverte jusqu'à une position de fermeture de moule au moyen du mécanisme de charnière (4) dans une première et une deuxième étape de rotation, **caractérisé en ce que** :
- le mécanisme de charnière (4) est agencé pour que, pendant au moins une partie de la première étape de rotation, le premier moule (2) subisse un mouvement combiné de rotation et de translation.

2. Agencement de fabrication de pale d'éolienne selon la revendication 1, dans lequel le mécanisme de charnière (4) est agencé pour que le premier moule (2) effectue un mouvement de translation, pendant la première étape de rotation, à distance du deuxième moule (3).

3. Agencement de fabrication de pale d'éolienne selon l'une quelconque des revendications 1 ou 2, dans lequel le mécanisme de charnière (4) comprend au moins un élément de rotation (41) qui, au niveau d'un premier raccordement d'élément (411), est raccordé en rotation à une unité de fixation (42) qui est adaptée pour rester fixe pendant la première étape de rotation, et au niveau d'un deuxième raccordement d'élément (412), est raccordé en rotation au premier moule (2), la distance entre le deuxième raccordement d'élément (412) et le deuxième moule (3) étant, au moins pendant la position de moule ouverte du premier moule (2), plus courte que la distance entre le premier raccordement d'élément (411) et le deuxième moule (3).

4. Agencement de fabrication de pale d'éolienne selon la revendication 3, dans lequel la distance entre le centre de gravité du premier moule (2) et le deuxième moule (3) est plus courte que la distance entre le deuxième raccordement d'élément (412) et le deuxième moule (3).

5. Agencement de fabrication de pale d'éolienne selon l'une quelconque des revendications 3 ou 4, dans lequel l'élément de rotation (41) est adapté pour tourner dans la direction opposée par rapport au premier moule (2).

6. Agencement de fabrication de pale d'éolienne selon l'une quelconque des revendications 3 à 5, dans lequel le mécanisme de charnière (4) comprend au moins une unité d'entraînement (43) adaptée pour agir, pendant la première étape de rotation, sur au moins l'un des au moins un élément de rotation (41) afin de pousser l'élément de rotation (41) pour qu'il tourne autour du premier raccordement d'élément (411).

7. Agencement de fabrication de pale d'éolienne selon l'une quelconque des revendications 3 à 6, dans lequel le premier moule (2) est adapté pour tourner pendant la première et une deuxième étape de rotation, autour d'un premier et d'un deuxième axe de rotation (A11, A12, A2) respectivement, et la distance entre le deuxième axe de rotation (A2) et le deuxième moule (3) est, au moins dans la position de moule ouverte, plus courte que la distance entre le deuxième raccordement d'élément (412) et le deuxième moule (3).

8. Agencement de fabrication de pale d'éolienne selon l'une quelconque des revendications 3 à 7, dans lequel le premier moule (2) est prévu avec au moins un rouleau (22) adapté pour supporter au moins une partie du poids du premier moule (2), la distance entre le rouleau (22) et le deuxième moule (3) étant plus courte que la distance entre le deuxième raccordement d'élément (412) et le deuxième moule (3), au moins dans la position de moule ouverte.

9. Agencement de fabrication de pale d'éolienne selon la revendication 8, dans lequel la distance entre le rouleau (22) et le deuxième moule (3) est plus courte que la distance entre le centre de gravité du premier moule (2) et du deuxième moule (3), au moins dans la position de moule ouverte.

10. Procédé pour fabriquer une pale d'éolienne, en utilisant un agencement de fabrication comprenant un premier moule (2) et un deuxième moule (3) raccordés par un mécanisme de charnière (4) et présentant des première et deuxième surfaces de moulage (21, 31) allongées respectives, le procédé comprenant l'étape consistant à faire tourner le premier moule (2) d'une position de moule ouverte à une position de fermeture de moule, dans une première et une deuxième étape de rotation, **caractérisé en ce que**, pendant au moins une partie de la première étape de rotation, le premier moule (2) subit un mouvement combiné de rotation et de translation.

11. Procédé selon la revendication 10, dans lequel le premier moule (2) effectue un mouvement de translation, dans la première étape de rotation, à distance du deuxième moule (3).

12. Procédé selon l'une quelconque des revendications 10 ou 11, comprenant l'étape consistant à faire tourner, pendant la première étape de rotation, au moins un élément de rotation (41) autour d'un premier raccordement d'élément (411) entre l'élément de rotation (41) et une unité de fixation (42) qui reste fixe pendant la première étape de rotation et l'étape consistant à faire tourner simultanément le premier moule (2) autour d'un deuxième raccordement d'élément (412) entre le premier moule (2) et l'élément de rotation (41), la distance entre le deuxième raccordement d'élément (412) et le deuxième moule (3) étant, au moins lorsque le premier moule (2) est dans la position de moule ouverte, plus courte que la distance entre le premier raccordement d'élément (411) et le deuxième moule (3).

13. Procédé selon la revendication 12, dans lequel la distance entre le centre de gravité du premier moule (2) et du deuxième moule (3) est, au moins lorsque le premier moule (2) est dans la position de moule ouverte, plus courte que la distance entre le deuxième raccordement d'élément (412) et le deuxième moule (3).

14. Procédé selon l'une quelconque des revendications 12 ou 13, dans lequel l'élément de rotation (41) est entraîné en rotation dans la direction opposée par rapport au premier moule (2).

15. Procédé selon l'une quelconque des revendications 12 à 14, dans lequel le premier moule (2) tourne pendant la première et une deuxième étape de rotation, autour d'un premier et d'un deuxième axe de rotation (A11, A12, A2) respectivement, et la distance entre le deuxième axe de rotation (A2) et le deuxième moule (3) est, au moins dans la position de moule ouverte, plus courte que la distance entre le deuxième raccordement d'élément (412) et le deuxième moule (3).
